# DEMANDE DE BREVET EUROPEEN

(11) **EP 1 650 684 A1**
(43) Date de publication de la demande: **26.04.2006**
(21) Numéro de dépôt: 05300712.6
(22) Date de dépôt: 02.09.2005
(51) Int. Cl.: G06F 17/30

(54) **Dispositif de médiation pour accéder à des applications non Internet depuis des applications Internet**

(30) Priorité: 20.10.2004 FR 0411179
(71) Demandeur: ALCATEL, 75008 Paris (FR)
(72) Inventeur: Delorme, Laurent, 94110 Arcueil (FR); Le Moing, Sandra, 91310 Linas (FR); Pernot, Thierry, 91250 Saint Germain les Corbeil (FR); Rojnic, Jean, 92160 Antony (FR)
(74) Mandataire: Chaffraix, Sylvain

(57) **Abrégé**

Un dispositif est dédié à la médiation entre des applications Internet (AI1), accessibles par un navigateur Internet (NI) implanté dans un équipement de communication (UE) raccordé à un réseau de communication à protocole Internet, et des applications non Internet (AN11-ANIP) accessibles par au moins un navigateur secondaire (NN11-NNIN) implanté dans l'équipement de communication (UE). Ce dispositif comprend des moyens de médiation (MM1, MM2) chargés, chaque fois qu'un utilisateur active une première application Internet au moyen d'un navigateur Internet puis communique à cette première application un message d'interaction, au format du navigateur Internet et comportant des données représentatives d'une seconde application non Internet et d'au moins une opération à effectuer sur cette seconde application, i) de déterminer un navigateur non Internet adapté à la seconde application, ii) de convertir des données contenues dans le message d'interaction reçu et représentatives d'au moins une opération à effectuer sur la seconde application, en données d'activation converties compréhensibles par le navigateur non Internet, et iii) de contacter le navigateur non Internet déterminé pour qu'il accède à la seconde application afin d'effectuer sur celle-ci chaque opération représentée par les données converties.

## Description

L'invention concerne le domaine des réseaux de communication, et plus précisément les interactions entre des applications Internet et des applications non Internet au sein de tels réseaux.

On entend ici par « application Internet » une application logicielle accessible et exécutable au moyen d'un navigateur Internet (ou « web browser ») implanté dans un équipement de communication, et pouvant être implantée dans cet équipement de communication ou dans un équipement de communication distant. Par ailleurs, on entend ici par « application non Internet » une application logicielle accessible au moyen d'un navigateur non Internet compatible avec un système d'exploitation donné, comme par exemple Alcatel NAV® ou Microsoft OLE®, ou de tout outil mettant en oeuvre des mécanismes spécifiques équivalents à ceux offerts par un système d'exploitation (ou OS pour « Operating System »), et exécutable au moyen du système d'exploitation correspondant. En outre, on entend ici par « équipement de communication » tout équipement d'utilisateur capable d'échanger des données avec un réseau de communication auquel il est couplé (ou raccordé). Il peut donc s'agir d'un téléphone fixe ou mobile, ou d'un ordinateur fixe ou portable, ou d'un assistant numérique personnel (ou PDA pour « Personal Digital Assistant »), ou encore d'un serveur, dès lors qu'il est équipé d'une fonction de communication.

Comme le sait l'homme de l'art, les applications logicielles non Internet sont généralement définies au moyen d'un langage de programmation de type C++ ou Java, tandis que les applications logicielles Internet sont généralement définies au moyen de pages de type HTML (« Hyper Texte Markup Language ») ou de petits programmes (ou « applets » ou applications Java Web Start, en général écrits en langage Java) qui s'exécutent au moyen d'un navigateur Internet.

De nombreuses applications logicielles, comme par exemple certaines applications de gestion de réseau, sont des applications non Internet, alors que la plupart des nouvelles applications logicielles sont réalisées en technologie Internet. Or, ces applications de types différents sont de plus en plus fréquemment amenées à travailler (ou interagir) ensemble.

Par exemple, dans un environnement de gestion de réseau il existe des applications dédiées à la visualisation d'éléments de réseau et d'autres dédiées à la détection d'alarmes relatives auxdits éléments de réseau. Pour que l'on puisse visualiser un élément de réseau à l'origine d'une alarme, et éventuellement transmettre à cet élément de réseau des paramètres spécifiques, il faut faire interagir les applications de visualisation et de détection concernées, ce qui nécessite l'établissement d'un « pont » entre celles-ci. Or, lorsque ces applications sont de types différents (ce qui est généralement le cas), un tel établissement de pont nécessite plusieurs opérations, parfois complexes, sur chacune des applications, et notamment l'activation par l'utilisateur de l'application de visualisation en dehors de l'environnement de l'application de détection. Cela résulte du fait que l'on accède à ces applications au moyen de navigateurs de types différents.

L'invention a donc pour but de remédier à tout ou partie des inconvénients précités.

Elle propose à cet effet un dispositif destiné à la médiation entre des applications Internet, accessibles par un navigateur Internet implanté dans un équipement de communication d'utilisateur (comme par exemple un ordinateur) raccordé à un réseau de communication à protocole Internet (IP), et des applications non Internet, accessibles par au moins un navigateur non Internet implanté dans cet équipement de communication d'utilisateur.

Ce dispositif de médiation se caractérise par le fait qu'il comprend des moyens de médiation qui interviennent chaque fois qu'un utilisateur active une première application Internet au moyen d'un premier navigateur Internet implanté dans l'équipement (de communication) d'utilisateur dans lequel ils sont eux-mêmes partiellement implantés, puis communique à cette première application Internet un message d'interaction au format du navigateur Internet et comportant des données représentatives d'une seconde application non Internet et d'au moins une opération à effectuer sur cette seconde application non Internet. Ces moyens de médiation sont plus précisément chargés i) de déterminer un navigateur non Internet adapté à la seconde application, ii) de convertir des données qui sont contenues dans le message d'interaction reçu et qui sont au format du navigateur Internet et représentatives d'au moins une opération à effectuer sur la seconde application non Internet, en données d'activation converties compréhensibles par le navigateur non Internet déterminé, et iii) de contacter le navigateur non Internet, déterminé, pour qu'il accède à la seconde application non Internet afin d'effectuer sur celle-ci chaque opération représentée par les données converties.

Le dispositif de médiation selon l'invention peut comporter d'autres caractéristiques complémentaires qui peuvent être prises séparément ou en combinaison, et notamment :
- l'opération à effectuer peut consister à activer l'application associée et/ou à transmettre au moins un message à l'application associée,
- ses moyens de médiation peuvent comprendre des premiers moyens de médiation implantés dans un serveur Internet et chargés, lorsqu'une application Internet est activée au moyen d'un navigateur Internet, d'accéder à une première mémoire, éventuellement implantée dans le serveur Internet, dans laquelle est stockée une première table établissant une correspondance entre des données représentatives d'applications Internet et/ou non Internet, des données représentatives des adresses où l'on peut accéder à ces applications et des navigateurs à utiliser pour accéder à ces applications, de manière à déterminer le navigateur non Internet associé à l'application non Internet désignée dans le message d'interaction reçu, et à délivrer un message d'information comportant au moins des données représentant l'adresse de l'application non Internet et le navigateur non Internet adapté à cette dernière,
- ses moyens de médiation peuvent comprendre des seconds moyens de médiation (téléchargés depuis un serveur Internet ou implantés dans l'équipement de communication d'utilisateur) et chargés, lorsqu'ils reçoivent un message d'information provenant des premiers moyens de médiation, d'accéder à une deuxième mémoire, éventuellement implantée dans l'équipement de communication d'utilisateur, stockant une deuxième table (ou un algorithme) établissant une correspondance entre des données représentatives des navigateurs non Internet et des données représentatives de modules de conversion de données, de manière i) à déterminer le module de conversion correspondant au navigateur non Internet représenté par certaines des données contenues dans le message d'information reçu, ii) puis à alimenter ce module de conversion avec certaines des données contenues dans le message d'interaction reçu afin qu'il les convertisse en données compréhensibles par le navigateur non Internet déterminé, et iii) à charger le navigateur non Internet déterminé d'accéder à la seconde application non Internet, à l'adresse représentée par les données contenues dans le message d'information reçu, pour que le navigateur non Internet effectue sur cette seconde application non Internet chaque opération associée représentée par les données converties, 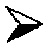 les modules de conversion de données peuvent être implantés dans les seconds moyens de médiation,
- l'une au moins des applications non Internet peut être implantée dans l'équipement de communication ou dans un autre équipement de communication raccordé à l'équipement de communication qui comprend les seconds moyens de médiation.

L'invention propose également un équipement de communication pour un réseau de communication à protocole Internet (IP), équipé de seconds moyens de médiation d'un dispositif de médiation du type de celui présenté ci-avant.

L'invention propose également un serveur Internet, pour un réseau Internet, équipé de premiers moyens de médiation d'un dispositif de médiation du type de celui présenté ci-avant.

D'autres caractéristiques et avantages de l'invention apparaîtront à l'examen de la description détaillée ci-après, et des dessins annexés, sur lesquels :
- la figure 1 illustre de façon schématique un exemple de couplage entre un réseau de communication et le réseau Internet, via un dispositif de médiation selon l'invention,
- la figure 2 illustre de façon schématique un exemple de réalisation d'un serveur Internet selon l'invention couplé à un exemple de réalisation d'un équipement de communication selon l'invention, dans lesquels sont respectivement répartis les premier et second modules de médiation d'un exemple de réalisation d'un dispositif de médiation selon l'invention, et
- la figure 3 illustre de façon schématique un exemple de diagramme algorithmique de médiation entre une application Internet et une application non Internet.

Les dessins annexés pourront non seulement servir à compléter l'invention, mais aussi contribuer à sa définition, le cas échéant.

L'invention a pour objet de permettre les interactions entre des applications Internet et des applications non Internet.

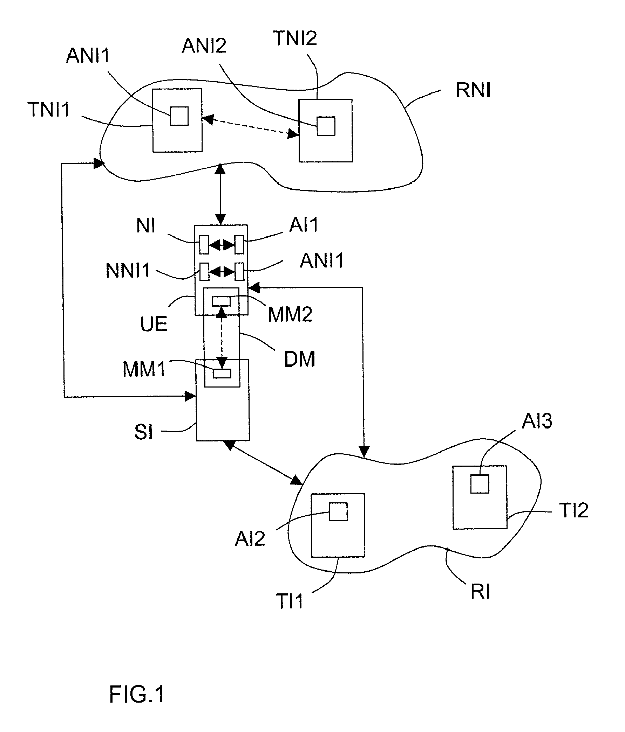

On se réfère tout d'abord à la figure 1 pour introduire l'invention.

Comme indiqué dans la partie introductive, dans le domaine des réseaux de communication deux mondes coexistent et interagissent : le monde dit « Internet », constitué du réseau global Internet RI, et le monde dit « non Internet », constitué d'un ensemble RNI de réseaux de communication, par exemple à protocole Internet (IP), raccordés au réseau global Internet RI ainsi que les uns aux autres par des passerelles (ou « gateways ») assurant la fonction de routeur.

Des équipements de communication d'utilisateur UE sont généralement raccordés au monde non Internet et/ou au monde Internet.

On entend ici par « équipement de communication UE » tout équipement d'utilisateur capable d'échanger des données avec un réseau de communication auquel il est couplé (ou raccordé). Il peut donc s'agir d'un téléphone fixe ou mobile, ou d'un ordinateur fixe ou portable, ou d'un assistant numérique personnel (ou PDA pour « Personal Digital Assistant »), ou encore d'un serveur, dès lors qu'il est équipé d'une fonction de communication.

Pour accéder au monde Internet RI, un équipement d'utilisateur UE doit comporter un navigateur Internet (ou «web browser») NI chargé d'accéder à et d'activer (ou exécuter) des applications Internet Ali implantées dans ledit équipement UE ou dans des terminaux Tlj du réseau Internet RI. Dans l'exemple non limitatif illustré, l'indice i est compris entre 1 et 3 et l'indice j est compris entre 1 et 2. Mais, les indices i et j peuvent prendre n'importe quelle valeur supérieure à zéro (0). Par ailleurs, un équipement d'utilisateur UE ou un terminal Tj peut comporter plusieurs applications Internet AI. Le navigateur Internet NI est par exemple Internet Explorer® de la société Microsoft.

En outre, un équipement d'utilisateur UE comporte généralement au moins un navigateur non Internet NNI1 chargé d'accéder à et d'activer (ou exécuter) au moins une application non Internet ANI1, implantée dans ledit équipement UE ou dans des terminaux TNIk d'un réseau de communication RNI auquel il est couplé (éventuellement via un ou plusieurs autres réseaux de communication RNI). Dans l'exemple non limitatif illustré, l'indice k est compris entre 1 et 2. Mais, l'indice k peut prendre n'importe quelle valeur. Les navigateurs non Internet NNI sont par exemple Alcatel NAV® de la société Alcatel et Microsoft OLE® de la société Microsoft. D'une manière générale, on entend par « navigateur non Internet », soit un dispositif de navigation compatible avec un système d'exploitation (ou OS pour « Operating System »), soit un outil mettant en oeuvre des mécanismes spécifiques de navigation exécutables au moyen d'un système d'exploitation donné.

Afin de permettre à un équipement d'utilisateur UE de faire interagir une application Internet AI avec au moins une application non Internet ANI, l'invention propose un dispositif de médiation DM.

Ce dispositif de médiation DM est plus précisément chargé, chaque fois qu'un utilisateur active une première application Internet au moyen d'un navigateur Internet implanté dans son équipement d'utilisateur UE, puis communique à cette première application Internet un message d'interaction au format du navigateur Internet et comportant des données représentatives d'une seconde application non Internet et d'au moins une opération à effectuer sur cette seconde application non Internet, de déterminer un navigateur non Internet adapté à cette seconde application non Internet.

Ensuite, le dispositif de médiation DM est chargé de convertir des données qui sont contenues dans le message d'interaction reçu et qui sont au format du navigateur Internet et représentatives d'au moins une opération à effectuer sur la seconde application non Internet, en données d'activation converties compréhensibles par le navigateur non Internet déterminé.

On entend ici par « opération », toute action relative à une application Internet AI ou non Internet ANI, comme par exemple l'activation (ou l'exécution) d'une application, ou la transmission d'un ou plusieurs messages à une application, après une éventuelle activation (ou exécution).

Enfin, le dispositif de médiation DM est agencé pour contacter le navigateur non Internet, déterminé, pour qu'il accède à la seconde application non Internet afin d'effectuer sur celle-ci chaque opération représentée par les données converties.

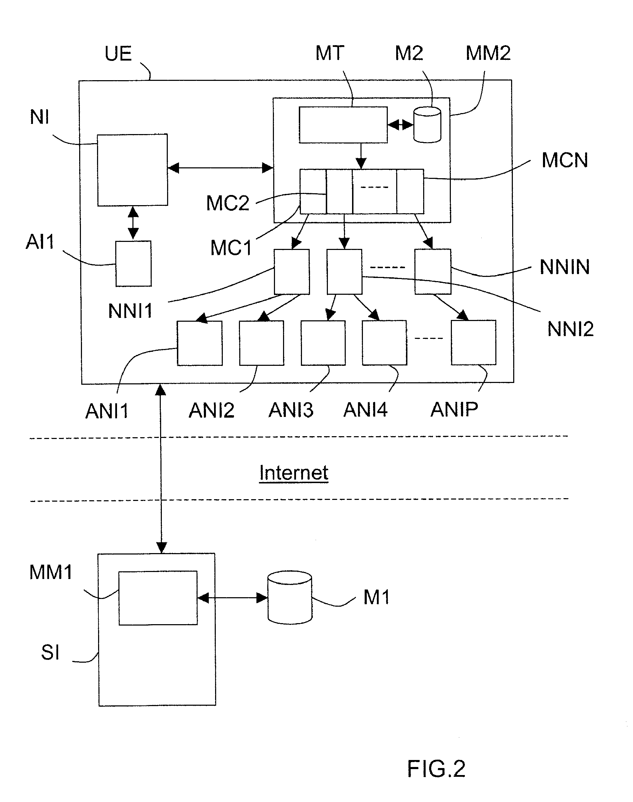

Préférentiellement, et comme cela est mieux illustré sur la figure 2, le dispositif de médiation DM est constitué de premier MM1 et second MM2 modules de médiation collaborant de préférence au sein d'une architecture de type client/serveur.

Le premier module de médiation MM1 est implanté dans un serveur Internet SI (appartenant par exemple au réseau Internet RI), tandis que le second module de médiation MM2 est téléchargé du même serveur Internet SI (ou éventuellement d'un serveur différent de celui contenant le premier module de médiation MM1) ou implanté dans chaque équipement d'utilisateur UE mettant en oeuvre l'invention.

Le premier module de médiation MM1 intervient chaque fois qu'une première application Internet AI a été activée par l'utilisateur d'un équipement UE, et qu'elle a reçu de ce dernier un message d'interaction au moyen du navigateur Internet NI associé, implanté dans cet équipement d'utilisateur UE.

Pour activer une première application Internet, par exemple AI1, l'utilisateur utilise le navigateur Internet (associé) NI.

Lorsque la première application Internet AI1 reçoit de l'utilisateur, via le navigateur Internet NI implanté dans un équipement d'utilisateur UE, un message d'interaction désignant une seconde application non Internet, par exemple ANI2, elle transmet au navigateur Internet NI les données, contenues dans ce message d'interaction, qui sont au moins représentatives de la seconde application non Internet ANI2 et de chaque opération devant être effectuée sur cette dernière, de sorte qu'il les transmette au premier module de médiation MM1.

Le premier module de médiation MM1 accède alors à une première mémoire M1 dans laquelle est stockée une première table établissant une correspondance entre des données représentatives d'applications Internet AI et/ou non Internet ANI, des données représentatives des adresses où l'on peut accéder à ces applications et des données représentatives des navigateurs secondaires NNI à utiliser pour accéder à ces applications.

Cette première mémoire M1, qui fait partie du dispositif de médiation DM, peut être implantée dans le serveur Internet SI. Mais, cela n'est pas obligatoire. Elle peut en effet être implantée dans un autre serveur Internet ou terminal TI du réseau Internet RI, dès lors qu'il est accessible au serveur Internet SI dans lequel est implanté le premier module de médiation MM1.

Le premier module de médiation MM1 détermine dans la première table de correspondance le navigateur non Internet, par exemple NNI1, qui est stocké en correspondance de la seconde application non Internet (ici ANI2) désignée par les données d'interaction reçues, ainsi que l'adresse de cette seconde application ANI2. Puis, il délivre à son serveur Internet SI un message d'information (ou requête de médiation), comportant des données représentant l'adresse de la seconde application non Internet ANI2 à activer et le navigateur non Internet NNI1 adapté à celle-ci, afin qu'il transmette ce message d'information à l'équipement d'utilisateur UE concerné.

A réception du message d'information l'équipement d'utilisateur UE le transmet à son second module de médiation MM2. Le second module de médiation MM2 comporte par exemple un module de traitement MT agencé de manière à accéder à une deuxième mémoire M2 dans laquelle est stockée une deuxième table (ou un algorithme) établissant une correspondance entre des données représentatives des navigateurs non Internet NNIn et des données représentatives de modules de conversion de données MCn. Dans l'exemple non limitatif illustré, l'indice n est compris entre 1 et N.

Chaque module de conversion MCn est associé à un unique navigateur non Internet NNIn et destiné à convertir les données qu'il reçoit au format du navigateur Internet NI en données compréhensibles par le navigateur non Internet NNln. Préférentiellement, chaque module de conversion MCn est également chargé de convertir les données qu'il reçoit au format d'un navigateur non Internet NNIn en données compréhensibles par le navigateur Internet NI.

Par ailleurs, chaque navigateur non Internet NNIn est associé à au moins une application non Internet ANIp. Dans l'exemple non limitatif illustré, l'indice p est compris entre 1 et P.

Il est important de noter que N peut être différent de P, ou en d'autres termes que le nombre de navigateurs non Internet NNIn peut être inférieur au nombre d'applications non Internet ANIp. Ainsi, dans l'exemple non limitatif illustré, le premier navigateur non Internet NNI1 est associé à des première ANI1 et seconde ANI2 applications non Internet, le deuxième navigateur non Internet NNI2 est associé à des troisième ANI3 et quatrième ANI4 applications non Internet, et le Nième navigateur non Internet NNIN est associé à une Pième application non Internet ANIP.

La deuxième mémoire M2 peut être implantée dans le second module de médiation MM2, comme illustré. Mais, cela n'est pas obligatoire. Elle pourrait en effet être implantée dans chaque équipement d'utilisateur UE, voire même dans un serveur externe, et couplée au second module de médiation MM2. Par ailleurs, les modules de conversion de données MCn peuvent être implantés dans le second module de médiation MM2, comme illustré. Mais, cela n'est pas obligatoire. Ils pourraient en effet être implantés dans chaque équipement d'utilisateur UE, voire même dans un serveur externe, et couplés au second module de médiation MM2.

Une fois que le module de traitement MT du second module de médiation MM2 a déterminé dans la deuxième table (ou l'algorithme) de correspondance le module de conversion, ici MC1, qui correspond au navigateur non Internet NNI1 représenté par certaines des données contenues dans le message d'information reçu, il alimente ce module de conversion, ici MC1, afin qu'il convertisse au moins les données représentatives des opérations à effectuer (contenues dans le message d'interaction reçu), en données converties compréhensibles par le navigateur non Internet NN11.

Puis, le module de traitement MT demande au navigateur non Internet NNI1 d'accéder à la seconde application non Internet ANI2 représentée par les données d'interaction reçues et lui communique les données converties. Le navigateur non Internet NNI2 accède alors à la seconde application non Internet ANI2, à l'adresse contenue dans le message d'information reçu, afin d'effectuer sur celle-ci chaque opération associée représentée par les données converties.

Lorsque la seconde application non Internet ANI n'est pas encore activée, le navigateur non Internet NNI correspondant doit tout d'abord la charger (ou l'exécuter) avant de pouvoir lui transmettre les données ou commandes (ou instructions), initialement fournies sous la forme de données d'interaction par l'utilisateur de l'équipement UE.

Par exemple, lorsque la première application Internet AI est une application dédiée à la détection d'alarmes relatives à des éléments de réseau, et que la seconde application non Internet ANI est dédiée à la visualisation de données et/ou d'images sur l'écran d'un équipement d'utilisateur UE, l'interaction entre ces deux applications, instaurée par le dispositif de médiation DM, permet de visualiser sur ledit écran un élément de réseau et la liste précise des alarmes présentes sur cet élément de réseau.

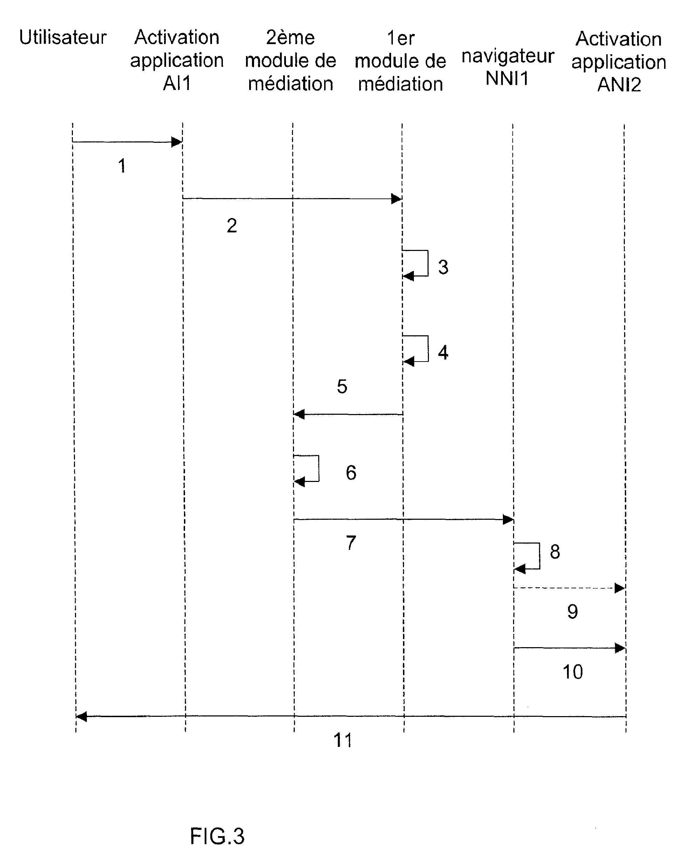

Les différentes étapes mises en oeuvre par le dispositif de médiation DM, pour permettre l'interaction entre deux applications, sont résumées dans l'exemple de diagramme algorithmique illustré sur la figure 3.

Plus précisément, dans une première étape 1 l'utilisateur de l'équipement UE active (ou charge) une première application Internet, par exemple AI1, au moyen du navigateur Internet NI correspondant, et lui communique un message d'interaction désignant une seconde application non Internet, par exemple ANI2, qu'il veut faire interagir avec l'application Internet AI1 et comportant des données représentatives d'au moins une opération qui doit être effectuée sur cette application non Internet ANI2.

Dans une deuxième étape 2 la première application Internet AI1 fournit au navigateur Internet NI les données, contenues dans le message d'interaction, qui sont au moins représentatives de la seconde application non Internet ANI2 et de chaque opération devant être effectuée sur cette dernière, de sorte qu'il les transmette au premier module de médiation MM1.

Dans une troisième étape 3 le premier module de médiation MM1 détermine dans la première mémoire M1 le navigateur non Internet NNI1 correspondant à l'application non Internet ANI2, ainsi que l'adresse de cette dernière.

Dans une quatrième étape 4 le premier module de médiation MM1 génère un message d'information (ou requête de médiation) contenant au moins l'identifiant du navigateur non Internet NNI1 et l'adresse de la seconde application non Internet ANI2.

Dans une cinquième étape 5 le premier module de médiation MM1 fait transmettre le message d'information au second module de médiation MM2.

Dans une sixième étape 6 le second module de médiation MM2 détermine le module de conversion MC1 correspondant au navigateur non Internet NNI1, puis il lui transmet les données d'activation représentatives des opérations à effectuer (précédemment reçues de l'équipement d'utilisateur UE) afin qu'il les convertisse au format dudit navigateur non Internet NNI1.

Dans une septième étape 7 le second module de médiation MM2 transmet au navigateur non Internet NNI1, désigné dans le message d'information reçu, les données converties par le module de conversion MC1, ainsi que l'adresse de la seconde application non Internet ANI2.

Dans une huitième étape 8 le navigateur non Internet NNI1 vérifie si la seconde application non Internet ANI2 a été précédemment activée (ou chargée).

Si ce n'est pas le cas, le navigateur non Internet NNI1 accède dans une neuvième étape 9 à la seconde application non Internet ANI2, à l'adresse reçue, afin de la charger et donc de l'activer.

Puis ou dans le cas contraire, le navigateur non Internet NNI1 effectue dans une dixième étape 10 chaque opération demandée par l'utilisateur. Il peut par exemple s'agir de transmettre un message contenant des données et/ou des instructions.

Enfin, dans une onzième étape 11 la seconde application non Internet ANI2 affiche le résultat de l'opération effectuée (il s'agit par exemple d'utiliser la seconde application non Internet de visualisation ANI2 pour afficher sur l'écran de l'équipement d'utilisateur UE un élément de réseau objet d'une alarme détectée dans la première application Internet AI1).

Dans les exemples de mise en oeuvre décrits ci-avant, les applications Internet et non Internet étaient toutes implantées dans l'équipement d'utilisateur fournissant les messages d'interaction. Mais, cela n'est pas une obligation. L'une au moins des applications Internet accessible par le navigateur Internet implanté dans l'équipement d'utilisateur et/ou l'une au moins des applications non Internet accessible par l'un des navigateurs non Internet implantés dans l'équipement d'utilisateur, peu(ven)t être implantées dans des équipements ou terminaux distants, couplés (ou raccordés) audit équipement d'utilisateur.

Par ailleurs, dans l'exemple illustré sur les figures 1 et 2, le second module de médiation MM2, du dispositif de médiation DM, est téléchargé à partir d'un serveur dans chaque équipement d'utilisateur UE. Mais, comme indiqué précédemment, on peut envisager que le module de médiation MM2 soit implanté dans l'équipement d'utilisateur UE.

Le dispositif de médiation DM selon l'invention, et notamment ses premier MM1 et second MM2 modules de médiation, peuvent être réalisés sous la forme de circuits électroniques, de modules logiciels (ou informatiques), ou d'une combinaison de circuits et de logiciels. Ainsi, tout ou partie du premier module de médiation peut être réalisée sous la forme de petits programmes en langage Java, de type « applet » ou Java web start. Le langage Java est particulièrement intéressant dans la mesure où il est supporté par de nombreux systèmes d'exploitation différents.

Grâce à l'invention il est désormais possible de naviguer du monde Internet vers le monde non Internet, quel que soit le protocole de navigation utilisé pour accéder à une application Internet ou non Internet, et de façon transparente tant pour l'utilisateur que pour les applications considérées.

L'invention ne se limite pas aux modes de réalisation de dispositif de médiation, d'équipement de communication et de serveur Internet décrits ci-avant, seulement à titre d'exemple, mais elle englobe toutes les variantes que pourra envisager l'homme de l'art dans le cadre des revendications ci-après.

## Revendications

1. Dispositif de médiation (DM) entre des applications Internet (AI) accessibles par un navigateur Internet (NI) implanté dans un équipement de communication d'utilisateur (UE) raccordé à un réseau de communication à protocole Internet (RNI) et des applications non Internet (ANI) accessibles par au moins un navigateur non Internet (NNI) implanté dans ledit équipement de communication d'utilisateur (UE), **caractérisé en ce qu'**il comprend des moyens de médiation (MM1,MM2) propres, chaque fois qu'un utilisateur active une première application Internet au moyen d'un navigateur Internet implanté dans ledit équipement d'utilisateur (UE), puis communique à ladite première application Internet un message d'interaction au format dudit navigateur Internet et comportant des données représentatives d'une seconde application non Internet et d'au moins une opération à effectuer sur cette seconde application non Internet, i) de déterminer un navigateur non Internet adapté à ladite seconde application non Internet, ii) de convertir des données contenues dans ledit message d'interaction reçu et au format dudit navigateur Internet et représentatives d'au moins une opération à effectuer sur ladite seconde application non Internet, en données d'activation converties compréhensibles par ledit navigateur non Internet déterminé, et iii) à contacter ledit navigateur non Internet déterminé pour qu'il accède à ladite seconde application non Internet de manière à effectuer sur celle-ci chaque opération représentée par lesdites données converties.

2. Dispositif selon la revendication 1, **caractérisé en ce que** ladite opération à effectuer consiste à activer la seconde application non Internet associée.

3. Dispositif selon l'une des revendications 1 et 2, **caractérisé en ce que** ladite opération à effectuer consiste à transmettre au moins un message à l'application associée.

4. Dispositif selon l'une des revendications 1 à 3, **caractérisé en ce que** lesdits moyens de médiation (MM1, MM2) comprennent des premiers moyens de médiation (MM1) implantés dans un serveur Internet (SI) et agencés, en cas d'activation d'une première application Internet (AI) au moyen d'un navigateur Internet (NI) pour accéder à une première mémoire (M1) stockant une première table établissant une correspondance entre des données représentatives d'applications Internet (AI) et/ou non Internet (ANI), des données représentatives des adresses où l'on peut accéder auxdites applications et des navigateurs à utiliser pour accéder auxdites applications, de manière à déterminer ledit navigateur non Internet (NNI) associé à ladite seconde application non Internet (ANI) désignée dans ledit message d'interaction reçu, et à délivrer un message d'information comportant au moins des données représentant l'adresse de ladite seconde application non Internet et ledit navigateur non Internet adapté à cette dernière.

5. Dispositif selon la revendication 4, **caractérisé en ce que** ladite première mémoire (M1) est implantée dans ledit serveur Internet (SI).

6. Dispositif selon l'une des revendications 4 et 5, **caractérisé en ce que** lesdits moyens de médiation comprennent des seconds moyens de médiation (MM2) agencés, en cas de réception d'un message d'information provenant desdits premiers moyens de médiation (MM1), pour accéder à une deuxième mémoire (M2) stockant une deuxième table établissant une correspondance entre des données représentatives desdits navigateurs non Internet (NNI) et des données représentatives de modules de conversion de données (MC), de manière i) à déterminer le module de conversion (MC) correspondant au navigateur non Internet (NNI) représenté par certaines des données contenues dans ledit message d'information reçu, ii) puis à alimenter ce module de conversion (MC) avec certaines des données contenues dans ledit message d'interaction reçu afin qu'il les convertisse en données compréhensibles par ledit navigateur non Internet déterminé (NNI), et iii) à contacter ledit navigateur non Internet déterminé (NNI) pour qu'il accède à ladite seconde application non Internet (ANI), à l'adresse représentée par lesdites données contenues dans ledit message d'information reçu, et qu'il effectue sur cette seconde application non Internet (ANI) chaque opération associée représentée par lesdites données converties.

7. Dispositif selon la revendication 6, **caractérisé en ce que** lesdits seconds moyens de médiation sont téléchargés d'un serveur Internet dans ledit équipement de communication (UE).

8. Dispositif selon la revendication 6, **caractérisé en ce que** lesdits seconds moyens de médiation sont implantés dans ledit équipement de communication (UE).

9. Dispositif selon l'une des revendications 6 à 8, **caractérisé en ce que** ladite deuxième mémoire (M2) est implantée dans ledit équipement de communication (UE).

10. Dispositif selon l'une des revendications 6 à 9, **caractérisé en ce que** lesdits seconds moyens de médiation (MM2) comprennent lesdits modules de conversion de données (MC).

11. Dispositif selon l'une des revendications 1 à 10, **caractérisé en ce que** l'une au moins desdites applications non Internet (ANI) est implantée dans ledit équipement de communication (UE).

12. Dispositif selon l'une des revendications 1 à 11, **caractérisé en ce que** l'une au moins desdites applications non Internet (ANI) est implantée dans un autre équipement de communication (TNI1) raccordé audit équipement de communication (UE) comportant lesdits seconds moyens de médiation (MM2).

13. Equipement de communication (UE) pour un réseau de communication à protocole Internet (RNI), **caractérisé en ce qu'**il comprend des seconds moyens de médiation (MM2) d'un dispositif de médiation (DM) selon l'une des revendications précédentes.

14. Serveur Internet (SI) pour un réseau Internet (RI), **caractérisé en ce qu'**il comprend des premiers moyens de médiation (MM1) d'un dispositif de médiation (DM) selon l'une des revendications 1 à 12.
